# EUROPÄISCHE PATENTSCHRIFT

(11) **EP 2 216 450 B1**
(45) Veröffentlichungstag und Bekanntmachung des Hinweises auf die Patenterteilung: **11.11.2015**
(21) Anmeldenummer: 10001168.3
(22) Anmeldetag: 04.02.2010
(51) Int. Cl.: E03F 5/14, B01D 21/00

(54) **Kanalvorrichtung zur Abtrennung ungelöster Substanzen**
Channel device for separating undissolved substances
Dispositif de canal d' écoulement pour séparer des particules solides d' un fluide

(30) Priorität: 04.02.2009 DE 102009007537
(43) Veröffentlichungstag der Anmeldung: 11.08.2010
(73) Patentinhaber: Hobas Engineering GmbH, 9020 Klagenfurt (AT)
(72) Erfinder: Pollert, Jaroslav, 182 00 Praha 8 (CZ)
(74) Vertreter: Schweiger, Johannes

(56) Entgegenhaltungen:
- EP-A1- 0 836 876
- WO-A1-97/06872
- DE-A1- 19 916 964

## Beschreibung

Die vorliegende Erfindung betrifft eine Kanalvorrichtung zur Abtrennung ungelöster Substanzen aus einem Fluidstrom gemäß Patentanspruch 1.

Solche Kanalvorrichtungen kommen beispielsweise als röhrenförmige Überlaufmischwassersammler zum Einsatz, durch welche Verunreinigungen in einer Fluidströmung, beispielsweise Abwasser, durch Absetzen in einer Arbeitskammer von der Fluidströmung getrennt werden, indem von der Arbeitskammer nur der Überlauf weitergeleitet wird, während die am Boden der Arbeitskammer angereicherten Verunreinigungen durch einen dort vorgesehenen Ablauf ausgebracht werden können. Druckschrift EP 0 836 876 A1 offenbart einen Wasserablauf zur Behandlung von belasteter Flüssigkeit. Druckschrift WO 97/06872 offenbart eine Filtereinheit mit einem Selbstreinigungmechanismus. Druckschrift DE 199 16 964 A1 offenbart eine Rückhalteanlage für_Niederschlagswasser und Abwasser.

Das Dokument EP 0 836 876 wird als nächstliegender Stand der Technik betrachtet. Dieses Dokument entspricht dem Oberbegriff des Anspruchs 1.

Da das Absetzen von Verunreinigungen langwierig sein kann, ist die Effizienz von bekannten Kanalvorrichtungen zur Abtrennung ungelöster Substanzen verbesserungsfähig.

Technische Probleme liegen außerdem in der Überlastung von bekannten Mischwassersammlern auf Grund deren Geometrie und der hierdurch entstehenden hydraulischen Bedingungen, Energieverluste und Strömungsverteilung. Eine optimale Dimensionierung wirkt sich danach auch unmittelbar auf die Kosteneffizienz der Vorrichtung aus.

Aufgabe der vorliegenden Erfindung ist es daher, eine Kanalvorrichtung zur Abtrennung ungelöster Substanzen aus einem Fluidstrom zu schaffen, die eine optimierte Abtrennung bei bestmöglichen Fließverhalten des Fluidstromes in kürzerer Zeit ermöglicht.

Die vorgenannte Aufgabe wird durch eine Kanalvorrichtung gemäß Patentanspruch 1 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Grundidee der vorliegenden Erfindung ist es, durch mindestens eine zusätzliche Einrichtung im Arbeitsraum die Funktion der Kanalvorrichtung zu optimieren. Die zusätzlichen Einrichtungen, insbesondere Trennmittel zur Abtrennung von Verunreinigungen im Fluidstrom, ragen in die Arbeitskammer der Kanalvorrichtung hinein und beeinflussen damit das Fließverhalten des Fluidstroms, insbesondere aber das Fließverhalten beziehungsweise die Abtrenngeschwindigkeit von im Fluidstrom enthaltenen ungelösten Substanzen.

Die erfindungsgemäße Kanalvorrichtung umfasst demnach einen Zulauf, über den der Fluidstrom mit darin möglicherweise enthaltenen ungelösten Substanzen in die Kanalvorrichtung geführt wird, und zwar in einer Strömungsrichtung S. Die Kanalvorrichtung muss sowohl für starke Strömungen, beispielsweise nach starkem Regen, aber auch für geringfügig bis keine Strömungen ausgelegt sein und funktionieren.

Die Arbeitskammer ist mit Vorteil kanalförmig ausgebildet, damit ein möglichst gleichmäßiger Fluidstrom über eine längere Strecke gewährleistet ist. Die Arbeitskammer weist einen Ablauf für in der Arbeitskammer angereicherte ungelöste Substanzen an.

Zur Vermeidung erheblicher Erdarbeiten ist es von großem Vorteil, wenn der Überlaufkanal zumindest teilweise oberhalb der Arbeitskammer angeordnet ist, zumal der Überlaufkanal im Querschnitt kleiner als die Arbeitskammer ausgebildet sein kann.

Zwischen Überlaufkanal und Arbeitskammer ist mindestens eine Übergangsöffnung vorgesehen, die mit Vorteil schlitzförmig in Form eines länglichen, in Strömungsrichtung S verlaufenden Schlitzes ausgebildet sein kann.

Die erfindungsgemäße zusätzliche Einrichtung kann mit Vorteil als bewegliche Trenneinrichtung in der Arbeitskammer vorgesehen sein, damit bei Verschmutzungen der Trenneinrichtung ein eigenständiges Lösen von Verschmutzungen durch die Fluidströmung ermöglicht wird.

In einer vorteilhaften Ausführungsform der Erfindung weist die Trenneinrichtung in einer quer zur Strömungsrichtung S liegenden Querrichtung Q angeordnete Trennmittel, insbesondere Gitterstäbe, auf. Mit Vorteil sind die Trennmittel um eine in Querrichtung Q angeordnete Schwenkachse schwenkbar ausgebildet, da eine Schwenkbewegung wartungsarm ausgeführt werden kann und die Rückstellung der Trennmittel in die Ausgangslage automatisch erfolgen kann.

Dabei ist es von besonderem Vorteil, wenn die Schwenkachse oberhalb der Trennmittel angeordnet ist, so dass die Trennmittel allein durch die Schwerkraft rückgestellt werden.

Der Ablauf ist gemäß einer vorteilhaften Ausführungsform in einem Sumpfbereich am in Strömungsrichtung S liegenden Arbeitskammerende angeordnet.

In einer weiteren, vorteilhaften Ausführungsform der Kanalvorrichtung ist vorgesehen, dass die Trennmittel mit ihrem freien Ende bis in den Sumpfbereich ragen.

In einer weiteren vorteilhaften Ausführungsform der Erfindung ist vorgesehen, dass die über den Zulauf zulaufende Zulaufmenge Z und/oder die über den Ablauf ablaufende Ablaufmenge A einstellbar, insbesondere regelbar, sind, vorzugsweise in Abhängigkeit zueinander. Durch diese Maßname kann die Strömung beeinflusst werden, da erhebliche Schwankungen in der Zulaufmenge Z vorliegen können.

Besonders kostengünstig und einfach zu handhaben sind Kanalvorrichtungen, bei welchen die Arbeitskammer und/oder der Überlaufkanal aus Kunststoff gebildet sind, insbesondere wenn Arbeitskammer und Überlaufkanal einstückig und aus demselben Werkstoff gefertigt sind. Durch die vorgenannte Maßnahme wird außerdem eine perfekte Dichtigkeit der Kanalvorrichtung erreicht, da nur noch die Anschlüsse oder gegebenenfalls Mannlöcher gegenüber der Umgebung abzudichten oder an weitere Bauteile anzuschließen sind.

Indem die Arbeitskammer und/oder der Überlaufkanal rohrförmig ausgebildet sind und parallel zueinander in Strömungsrichtung S verlaufen, kann eine besonders vorteilhafte Geometrie vorgesehen werden, mit der die technischen Probleme in idealer Weise lösbar sind.

Soweit die Arbeitskammer und der Überlaufkanal lotrecht übereinander angeordnet sind, wobei der Überlaufkanal in die Arbeitskammer ragt, insbesondere mit der Übergangsöffnung des Überlaufkanals, wird die vorgenannte Geometrie noch weiter optimiert.

Eine weitere Optimierung ist möglich, indem der Überlaufkanal sich über eine Teillänge der Arbeitskammer erstreckt, einen Endes von dem Zulauf beabstandet ist und anderen Endes bis zum Ablauf reicht oder diesen überragt.

Hierbei bildet die Stirnfläche des Überlaufkanals mit Vorteil einen Strömungsbrecher in der Arbeitskammer.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: Eine Seitenansicht der erfindungsgemäßen Kanalvorrichtung,

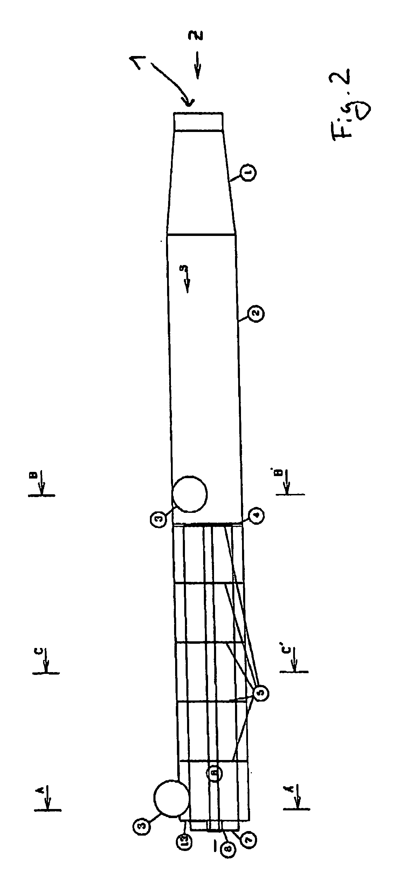

- Fig. 2:: eine Aufsicht auf die erfindungsgemäße Kanalvorrichtung,
- Fig. 3:: eine geschnittene Ansicht der erfindungsgemäßen Kanalvorrichtung gemäß Schnittlinie A-A aus Figur 1,
- Fig. 4:: eine geschnittene Ansicht der erfindungsgemäßen Kanalvorrichtung gemäß Schnittlinie C-C' aus Figur 1 und
- Fig. 5:: eine geschnittene Ansicht der erfindungsgemäßen Kanalvorrichtung gemäß Schnittlinie B-B' aus Figur 1.

In den Figuren sind gleiche Bauteile mit gleichen Bezugszeichen gekennzeichnet.

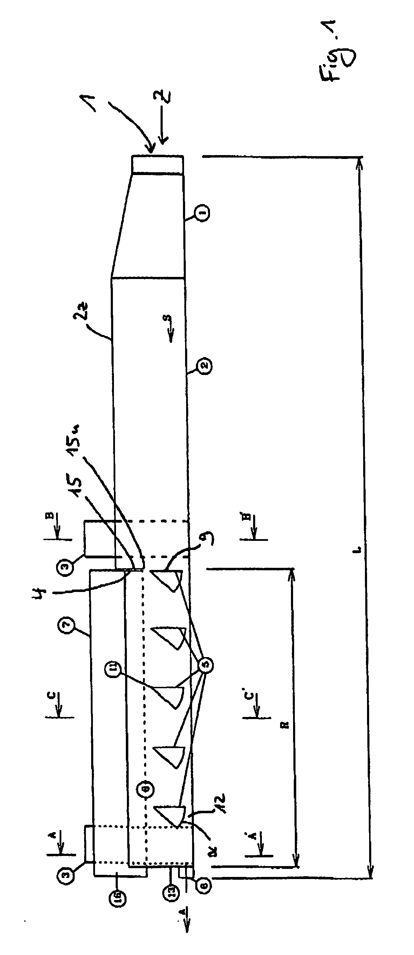

Figur 1 zeigt eine Kanalvorrichtung mit einem Zulauf 1, über den ein Fluidstrom in die Kanalvorrichtung eingeleitet wird. Der Zulauf 1 kann beispielsweise an einen Kanal angeschlossen sein. Der Zulauf 1 läuft bei der hier gezeigten Ausführungsform konisch erweiternd bis zur Arbeitskammer 2, die durch einen Verlängerungsabschnitt 2z flexibel verlängert werden kann, um eine größere Fluidmenge aufnehmen beziehungsweise an die örtlichen Gegebenheiten angepasst werden zu können. Der Zulauf 1, der Verlängerungsabschnitt 2z und die Arbeitskammer 2 können einstückig ausgebildet sein. Auf Grund der Größe der Kanalvorrichtung ergeben sich aber hier möglicherweise Transportprobleme, weshalb ein modularer Aufbau von Vorteil sein kann.

Der Verlängerungsabschnitt 2z und die Arbeitskammer 2 sind rohrförmig, im vorliegenden Fall zylinderförmig ausgebildet und enden an einem dem Zulauf 1 gegenüberliegenden Arbeitskammerende 13, an dem auch ein Ablauf 8 mit einer geringeren Querschnittsfläche als der Querschnittsfläche der Arbeitskammer 2 angeordnet ist. Über den Ablauf 8 kann eine Ablaufmenge A aus einem Sumpfbereich 12 der Arbeitskammer 2 abgezogen werden. Mit Vorteil ist die Ablaufmenge A einstellbar beziehungsweise verstellbar.

Vom Zulauf 1 bis zum Arbeitskammerende 13 setzen sich ungelöste Substanzen im Fluidstrom im Sumpfbereich 12 der Arbeitskammer 2 ab, wobei eine möglichst laminare Strömung des Fludistroms zu gewährleisten ist. Nicht gelöste Substanzen können beispielsweise spezifische Verunreinigungen wie Schwermetalle sein und je höher die Dichte der nicht gelösten Substanzen ist, desto schneller setzen sich die ungelösten Substanzen im Sumpfbereich 12 der Arbeitskammer 2 ab und können als konzentrierter Fluidstrom über den Ablauf 8 aus der Arbeitskammer 2 ausgetragen werden.

Die Gesamtlänge L vom Zulauf 1 bis zum Arbeitskammerende 13 kann insbesondere durch Vorsehen verschiedener Verlängerungsabschnitte 2z variiert werden.

Mit einem Abstand von mindestens L/4, insbesondere L/2 von dem Zulauf 1 erstreckt sich über mindestens die Restlänge R der Arbeitskammer ein Überlaufkanal 7, der die Arbeitskammer 2 an deren Arbeitskammerende 13 mit Vorteil geringfügig überragt, um die Kanalvorrichtung an weitere Vorrichtungen anschließen zu können, beispielsweise ein Kanalsystem oder einen Auffangbehälter.

Der Überlaufkanal 7 ist zumindest teilweise oberhalb der Arbeitskammer 2 angeordnet und verläuft rohrförmig parallel zu der Arbeitskammer 2. Der Überlaufkanal 7 ist mit der Arbeitskammer 2 integral ausgebildet und ragt teilweise in die Arbeitskammer 2 von oben hinein, insbesondere mit einer in dem Überlaufkanal 7 integrierten Übergangsöffnung 6, die sich schlitzförmig zumindest teilweise über die Restlänge R erstreckt.

Durch die zumindest teilweise Abtrennung beziehungsweise Absetzung der unerwünschten Substanzen im Sumpfbereich 12 der Arbeitskammer 2 ist oberhalb des Sumpfbereichs 12 ein von ungelösten Substanzen zumindest teilweise gereinigtes Fluid vorhanden, das durch die Übergangsöffnung 6 in gereinigter Form in den Überlaufkanal 7 eintritt. Durch die Bewegung des Fluidstroms in Strömungsrichtung S wird der gereinigte Fluidstrom entlang des Zulaufkanals 7 bis zu dessen Ausgang 16 geleitet.

Erfindungsgemäß sind als Trenneinrichtung 5 bei der vorliegenden Ausführungsform fünf Trennmittel 9 vorgesehen.

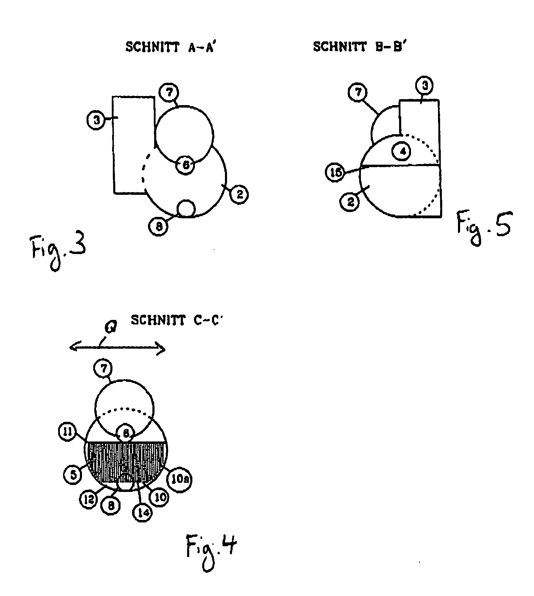

Jedes Trennmittel 9 weist eine unmittelbar unterhalb der Übergangsöffnung 6 beziehungsweise unterhalb des Überlaufkanals 7 in einer Querrichtung Q gemäß Figur 4 verlaufende Schwenkachse 11 auf, an der Gitterstäbe 10 schwenkbar angeordnet sind. Die Gitterstäbe 10 verlaufen ebenfalls in Querrichtung Q zur Strömungsrichtung S beziehungsweise quer zur Mittelachse der Arbeitskammer 2, hier lotrecht von der horizontal verlaufenden Schwenkachse 11 mit ihrem freien Ende 14 bis in den Sumpfbereich 12 nach unten. Die Gitterstäbe enden im Sumpfbereich 12, wobei seitliche Gitterstäbe 10s wegen der rohrförmigen Geometrie kürzer ausgebildet sind, um auch in diesem seitlichen Bereich eine Schwenkbewegung zuzulassen.

Die Schwenkbewegung ist entgegen der Strömungsrichtung S in einer lotrechten Stellung begrenzt, wie in Figur 1 dargestellt. In Strömungsrichtung S ist die Schwenkbewegung bei einem Winkel α < 90°, insbesondere < 60°, vorzugsweise ≤ 45° beschränkt. Die Rückstellung der Gitterstäbe 10 in die lotrechte Ausgangsstellung erfolgt durch die Schwerkraft, wobei die Gitterstäbe 10 aus Metall oder Kunststoff gebildet sind. Sobald die Gitterstäbe 10 durch Verunreinigungen verschmutzen, steigt der Widerstand der Gitterstäbe gegenüber der Fluidströmung, so dass die Gitterstäbe durch die Fluidströmung in Strömungsrichtung S ausschwenken und durch die Fluidströmung automatisch gereinigt werden.

Die Trennmittel 9 sind mit Vorteil austauschbar, beispielsweise durch ein in der Kanalvorrichtung vorgesehenes Mannloch 3 beziehungsweise mehrere in der Kanalvorrichtung vorgesehene Mannlöcher 3.

In Strömungsrichtung S unmittelbar vor dem Überlaufkanal 7 ist ein Strömungsbrecher 15 vorgesehen, der sich von oben über einen Teil der Arbeitskammer 2 erstreckt, wobei eine Unterkante 15u des Strömungsbrechers mit Vorteil horizontal verläuft. Die Unterkante 15u befindet sich in etwa auf gleicher Höhe mit der Schwenkachse 11 und verläuft mit Vorteil parallel zur Schwenkachse 11.

Der Strömungsbrecher 15 kann zumindest teilweise durch eine Stirnfläche 4 des Überlaufkanals 7 gebildet sein.

Mit Vorteil sind praktisch alle Bestandteile der Kanalvorrichtung mit Ausnahme der Trennmittel aus Kunststoff, vorzugsweise zumindest teilweise aus Polyesterharz, insbesondere glasfaserverstärkt, gebildet.

### Bezugszeichenliste

- S: Strömungsrichtung
- Q: Querrichtung
- A: Ablaufmenge
- Z: Zulaufmenge
- L: Gesamtlänge
- R: Restlänge
- 1: Zulauf
- 2: Arbeitskammer
- 2z: Verlängerungsabschnitt
- 3: Mannlöcher
- 4: Stirnfläche
- 5: Trenneinrichtung
- 6: Übergangsöffnung
- 7: Überlaufkanal
- 8: Ablauf
- 9: Trennmittel
- 10: Gitterstäbe
- 10s: seitliche Gitterstäbe
- 11: Schwenkachse
- 12: Sumpfbereich
- 13: Arbeitskammerende
- 14: freies Ende
- 15: Strömungsbrecher
- 15u: Unterkante
- 16: Ausgang

## Patentansprüche

1. Kanalvorrichtung zur Abtrennung ungelöster Substanzen aus einem Fluidstrom mit folgenden Merkmalen:
- einem Zulauf (1) zur Zuführung des Fluidstroms in die Kanalvorrichtung in einer Strömungsrichtung (S),
- einer, insbesondere kanalförmigen, Arbeitskammer (2) mit einem Ablauf (8) für in der Arbeitskammer (2) angereicherte ungelöste Substanzen,
- einem, zumindest teilweise oberhalb der Arbeitskammer (2) angeordneten Überlaufkanal (7) und
- einer Übergangsöffnung (6) zwischen der Arbeitskammer (2) und dem Überlaufkanal (7), wobei
in der Arbeitskammer (2) mindestens eine be wegliche Trenneinrichtung (5) vorgesehen ist,
wobei die Arbeitskammer (2) und der Überlaufkanal (7) lotrecht übereinander angeordnet sind und wobei der Überlaufkanal (7) zumindest teilweise in die Arbeitskammer (2) ragt,
**dadurch gekennzeichnet, dass** die Arbeitskammer (2) und/oder der Überlaufkanal (7) rohrförmig ausgebildet sind, und das die Arbeitskammer (2) und der Überlaufkanal (7) parallel zueinander in Strömungsrichtung (S) verlaufen.

2. Kanalvorrichtung nach Anspruch 1, bei der die Trenneinrichtung (5) in einer quer zur Strömungsrichtung (S) liegenden Querrichtung (Q) angeordnete Trennmittel (9), insbesondere Gitterstäbe (10), aufweist.

3. Kanalvorrichtung nach Anspruch 2, bei der die Trennmittel (9) um eine in Querrichtung (Q) angeordnete Schwenkachse (11) schwenkbar ausgebildet sind.

4. Kanalvorrichtung nach Anspruch 3, bei der die Schwenkachse (11) oberhalb der Trennmittel (9) angeordnet ist.

5. Kanalvorrichtung nach Anspruch 1, bei der der Ablauf (8) in einem Sumpfbereich (12) am in Stromungsrichtung (S) liegenden Arbeitskammerende (13) angeordnet ist.

6. Kanalvorrichtung nach Anspruch 5 und 6, bei der die Trennmittel (9) mit ihrem freien Ende (14) zumindest teilweise bis in den Sumpfbereich (12) ragen.

7. Kanalvorrichtung nach Anspruch 1, bei der die über den Zulauf (1) zulaufende Zulaufmenge (Z) und/oder die Ober den Ablauf (8) ablaufende Ablaufmenge (A) einstellbar, insbesondere regelbar, sind, vorzugweise in Abhängigkeit zueinander.

8. Kanalvorrichtung nach Anspruch 1, bei der die Arbeitskammer (2) und/oder der Überlaufkanal (7) aus Kunststoff, insbesondere einstückig, gebildet sind.

9. Kanal Vorrichtung nach Anspruch 1, bei der der Überlaufkanal (7) zumindest teilweise mit der Übergangsöffnung (6) in die Arbeitskammer (2) ragt.

10. Kanalvorrichtung nach Anspruch 1, bei der der Überlaufkanal (7) sich über eine Teillänge der Arbeitskammer (2) erstreckt, einen Endes von dem Zulauf (1) beabstandet ist und anderen Endes bis zum Ablauf (8) reicht oder diesen überragt.

11. Kanalvorrichtung nach Anspruch 9, bei der der Überlaufkanal (7) in der Arbeitskammer (2) einen Strömungsbrecher (15) bildet, insbesondere mit seiner Stirnfläche (4).

## Claims

1. A channel device for separating undissolved substances from a fluid flow with the following features:
- an intake (1) for feeding the fluid flow into the channel device in a flow direction (S),
- an, in particular channel-shaped, working chamber (2) with a discharge (8) for undissolved substances accumulated in the working chamber (2),
- an overflow channel (7), disposed at least partially above the working chamber (2), and
- a transfer opening (6) between the working chamber (2) and the overflow channel (7), wherein at least one mobile separation device (5) is provided in the working chamber (2), wherein the working chamber (2) and the overflow channel (7) are disposed vertically one above the other and wherein the overflow channel (7) projects at least partially into the working chamber (2),
**characterised in that**
the working chamber (2) and/or the overflow channel (7) are constituted tubular and that the working chamber (2) and the overflow channel (7) run parallel to one another in flow direction (S).

2. The channel device according to claim 1, wherein the separation device (5) comprises separation means (9), in particular grid bars (10), disposed in a transverse direction (Q) lying normal to the flow direction (S).

3. The channel device according to claim 2, wherein the separation means (9) are constituted swivellable about a swivel axis (11) disposed in the transverse direction (Q).

4. The channel device according to claim 3, wherein the swivel axis (11) is disposed above the separation means (9).

5. The channel device according to claim 1, wherein the discharge (8) is disposed in a sump region (12) at the working chamber end (13) lying in flow direction (S).

6. The channel device according to claim 5 or 6, wherein the separation means (9) project with their free end (14) at least partially into the sump region (12).

7. The channel device according to claim 1, wherein the intake quantity (Z) flowing in via the intake (1) and/or the discharge quantity (A) flowing out via the discharge (8) can be adjusted, in particular regulated, preferably as a function of one another.

8. The channel device according to claim 1, wherein the working chamber (2) and/or the overflow channel (7) are formed from plastic, in particular integrally.

9. The channel device according to claim 1, wherein the overflow channel (7) projects at least partially with the transfer opening (6) into the working chamber (2).

10. The channel device according to claim 1, wherein the overflow channel (7) extends over a partial length of the working chamber (2), is spaced apart from the intake (1) at one end and reaches up to the discharge (8) or projects beyond the latter at the other end.

11. The channel device according to claim 9, wherein the overflow channel (7) forms in the working chamber (2) a flow breaker (15), in particular with its end face (4).

## Revendications

1. Dispositif de canalisation pour la séparation de substances non dissoutes d'un flux de fluide, présentant les caractéristiques suivantes :
- une arrivée (1) pour l'acheminement du flux de fluide dans le dispositif de canalisation dans un sens écoulement (S),
- une cellule de travail (2) en particulier en forme de canalisation, comportant une évacuation (8) pour les substances non dissoutes enrichies dans la cellule de travail (2),
- un canal de trop-plein (7) disposé au moins partiellement au-dessus de la cellule de travail (2) et
- une ouverture de transition (6) entre la cellule de travail (2) et le canal de trop-plein (7), étant prévu dans la cellule de travail (2) au moins un dispositif de séparation mobile (5), la cellule de travail (2) et le canal de trop-plein (7) étant disposés superposés verticalement et le canal de trop-plein (7) dépassant du moins partiellement dans la cellule de travail (2),
**caractérisé en ce que**
la cellule de travail (2) et/ou le canal de trop-plein (7) ont une conformation tubulaire et que la cellule de travail (2) et le canal de trop-plein (7) s'étendent parallèlement l'un à l'autre dans le sens d'écoulement (S).

2. Dispositif de canalisation selon la revendication 1, dans lequel le dispositif de séparation (5) présente des moyens de séparation (9), en particulier des barreaux de grille (10), disposés dans un sens transversal (Q) situé à la transversale du sens d'écoulement (S).

3. Dispositif de canalisation selon la revendication 2, dans lequel les moyens de séparation (9) sont conçus de manière à pouvoir pivoter autour d'un axe de pivotement (11) disposé dans le sens transversal (Q).

4. Dispositif de canalisation selon la revendication 3, dans lequel l'axe de pivotement (11) est disposé au-dessus des moyens de séparation (9).

5. Dispositif de canalisation selon la revendication 1, dans lequel l'évacuation (8) est disposée dans une partie humide (12) de l'extrémité de la cellule de travail (13) située dans le sens d'écoulement.

6. Dispositif de canalisation selon les revendications 5 et 6, dans lequel les moyens de séparation (9) dépassent du moins partiellement par leur extrémité libre (14) jusque dans la partie humide (12).

7. Dispositif de canalisation selon la revendication 1, dans lequel la quantité entrant (Z) par l'arrivée (1) et/ou la quantité sortant (A) par l'évacuation (8) sont réglables, en particulier réglables, de préférence l'une en fonction de l'autre.

8. Dispositif de canalisation selon la revendication 1, dans lequel la cellule de travail (2) et/ou le canal de trop-plein (7) sont composés de matière plastique et sont en particulier monobloc.

9. Dispositif de canalisation selon la revendication 1, dans lequel le canal de trop-plein (7) dépasse du moins partiellement depuis l'ouverture de transition (6) dans la cellule de travail (2).

10. Dispositif de canalisation selon la revendication 1, dans lequel le canal de trop-plein (7) s'étend sur une partie de la longueur de la cellule de travail (2), est espacé d'une extrémité de l'arrivée (1) et va jusqu'à l'évacuation (8) ou dépasse de celle-ci à l'autre extrémité.

11. Dispositif de canalisation selon la revendication 9, dans lequel le canal de trop-plein (7) forme dans la cellule de travail (2) un coupe-flux (15), en particulier par sa surface frontale (4).
